# EUROPÄISCHE PATENTANMELDUNG

(11) **EP 2 600 058 A1**
(43) Veröffentlichungstag der Anmeldung: **05.06.2013**
(21) Anmeldenummer: 11191550.0
(22) Anmeldetag: 01.12.2011
(51) Int. Cl.: F22B 1/00, F22B 37/74, F22B 1/16, F28D 1/02, F28D 1/047, F03G 6/00, F22B 35/10

(54) **Vorrichtung zur Überführung eines flüssigen Arbeitsmediums in den gas- bzw. dampfförmigen Zustand, insbesondere zur Erzeugung von Wasserdampf**

(71) Anmelder: Siemens Aktiengesellschaft, 80333 München (DE); Steinmüller Engineering GmbH, 51643 Gummersbach (DE)
(72) Erfinder: Brinkmann, Jürgen, 51647 Gummersbach (DE); Brückner, Jan, 91080 Uttenreuth (DE); Edelmann, Heiner, 91085 Weisendorf (DE); Ernst, Ralph, 51643 Gummersbach (DE); Hoffmann, Waldemar, 51491 Overath (DE)

(57) **Zusammenfassung**

Die Erfindung betrifft einen Dampferzeuger zur Überführung eines flüssigen Arbeitsmediums in den gas- bzw. dampfförmigen Zustand, insbesondere zur Erzeugung von Wasserdampf in einem solarthermischen Kraftwerk. Der Dampferzeuger umfasst wenigstens einen Wärmeträgermediumbehälter (1), der von einem Wärmeträgermedium, insbesondere einem Thermo-Öl, einer Salz-Schmelze oder einem Gel, durchströmt wird, sowie mehrere parallel geschaltete Arbeitsmediumleitungen (2), die sich durch den Wärmeträgermediumbehälter (1) erstrecken und von einem Arbeitsmedium parallel durchströmt werden, so dass Wärme von dem Wärmeträgermedium auf das Arbeitsmedium übertragen wird und das Arbeitsmedium in den gasförmigen Zustand übergeht. Dabei ist erfindungsgemäß vorgesehen, dass wenigstens einer der parallel geschalteten Arbeitsmediumleitungen (2) oder wenigstens einem Bündel von Arbeitsmediumleitungen (2) eine Absperrvorrichtung (5) zugeordnet ist, so dass die Arbeitsmediumleitung (2) bzw. das Bündel von Arbeitsmediumleitungen (2) lastabhängig zu- bzw. aufschaltbar sind.

## Beschreibung

Die Erfindung betrifft eine Vorrichtung zur Überführung eines flüssigen Arbeitsmediums in den gasförmigen Zustand, insbesondere zur Erzeugung von Wasserdampf, mit wenigstens einem Wärmeträgermediumbehälter, der von einem Wärmeträgermedium, insbesondere einem Thermo-Öl, einer Salz-Schmelze oder einem Gel, durchströmt wird, und mit mehreren parallel geschalteten Arbeitsmediumleitungen, die sich durch den Wärmeträgermediumbehälter erstrecken und von einem Arbeitsmedium parallel durchströmt werden, so dass Wärme von dem Wärmeträgermedium auf das Arbeitsmedium übertragen wird und das Arbeitsmedium in den gas- bzw. dampfförmigen Zustand übergeht.

Des Weiteren betrifft die Erfindung ein Kraftwerk mit
- einem Wärmeträgermedium-Kreislauf für ein Wärmeträgermedium, welches insbesondere unter Verwendung von Sonnenstrahlung erwärmt wird,
- einem Arbeitsmedium-Kreislauf,
- einem Dampferzeuger, der Teil des Wärmeträgermedium-Kreislaufs und des Arbeitsmedium-Kreislaufs ist und in dem Wärme von dem Wärmeträgermedium auf das Arbeitsmedium übertragen wird, so dass dieses in den gas- bzw. dampfförmigen Zustand übergeht, und
- einer dem Dampferzeuger in dem Arbeitsmedium-Kreislauf nachgeschalteten Turbine, die von expandierendem Arbeitsmedium angetrieben wird.

Die die Erdoberfläche erreichende Sonnenstrahlung stellt eine wichtige nicht-fossile Energiequelle dar. Insbesondere in Anbetracht des Klimawandels ist eine stärkere Nutzung von Solarenergie zur Bereitstellung von Strom erstrebenswert, um auf fossile Brennstoffe verzichten zu können und die mit diesen verbundene Nachteile - wie etwa die Produktion von Kohlendioxid - zu vermeiden.

Zur Bereitstellung von Strom unter Verwendung der von der Sonne emittierten elektromagnetischen Strahlung werden neben Solarzellen vor allem solarthermische Kraftwerke eingesetzt. In diesen wird im Allgemeinen ein Arbeitsmedium unter Verwendung von solarer Energie in den gasförmigen Zustand überführt, und die mit dem Phasenwechsel einhergehende Expansion wird - wie in einem konventionellen Dampfkraftwerk - genutzt, um eine Turbine zur Stromerzeugung anzutreiben. Dabei wird überwiegend das Prinzip der indirekten Verdampfung angewandt, d.h. das Arbeitsmedium wird nicht direkt unter Zufuhr von Sonnenstrahlung verdampft, sondern es wird zunächst ein Wärmeträgermedium der Sonnenstrahlung ausgesetzt und erwärmt. Die Sonnenstrahlung wird dazu vorteilhafter Weise mit geeigneten fokussierenden Elemente, wie Parabolrinnen-Kollektoren oder Fresnel-Kollektoren gebündelt und das Wärmeträgermedium, welches entlang der Brennlinie der Kollektoranordnung geführt wird, absorbiert die konzentrierte Sonnenstrahlung und wird erwärmt. Alternativ wird die Sonnenstrahlung durch ein Spiegelsystem auf eine zentrale Fläche gebündelt, in der das Wärmeträgermedium durch die konzentrierte Sonnenstrahlung erwärmt wird. In einer geeigneten Vorrichtung, wie etwa einem als Wärmetauscher ausgebildeten Dampferzeuger, wird anschließend Wärme von dem Wärmeträgermedium auf das Arbeitsmedium übertragen, so dass dieses verdampft.

Ein derartiger Dampferzeuger ist beispielsweise aus der DE 10 2010 009 485 A1 bekannt. Dieser umfasst einen Wärmeträgermediumbehälter, der von einem Wärmeträgermedium, beispielsweise einem Thermo-Öl oder einer Salz-Schmelze, durchströmt wird, und mehrere parallel geschaltete Arbeitsmediumleitungen, die sich durch den Wärmeträgermediumbehälter erstrecken. Die Arbeitsmediumleitungen werden von Wasser durchströmt, so dass Wärme von dem Wärmeträgermedium, welches unter Verwendung von Solarenergie erwärmt wurde, auf das Wasser übertragen wird und das Wasser verdampft.

In dem vorliegenden Konzept können statische und dynamische Instabilitäten sowie unzulässige Strömungsformen des Arbeitsmediums auftreten. Dies gilt insbesondere im niedrigen Lastbereich. Ein zuverlässiger Einsatz einer derartigen Vorrichtung in einem solarthermischen Kraftwerk ist demzufolge unterhalb einer gewissen Mindestlast nicht immer gewährleistet.

Ausgehend von diesem Stand der Technik ist es eine Aufgabe der vorliegenden Erfindung, eine Vorrichtung zur Überführung eines flüssigen Arbeitsmediums in den gasförmigen Zustand, insbesondere zur Erzeugung von Wasserdampf anzugeben, welche zuverlässig und sicher auch bei niedrigen Lasten verwendet werden kann.

Diese Aufgabe wird bei einer Vorrichtung der eingangs genannten Art dadurch gelöst, dass wenigstens einer der parallel geschalteten Arbeitsmediumleitungen eine Absperrvorrichtung zugeordnet ist, um die Arbeitsmediumleitung zu öffnen und zu verschließen.

Bei einem Kraftwerk der eingangs genannten Art wird die Aufgabe dadurch gelöst, dass der Dampferzeuger in Form der erfindungsgemäßen Vorrichtung ausgebildet ist.

Der Erfindung liegt die Idee zu Grunde, eine Vorrichtung zur Überführung eines flüssigen Arbeitsmediums in den gas- bzw. dampfförmigen Zustand lastabhängig zu steuern und zwar derart, dass bei niedriger Last - also geringer Massenstromdichte von Arbeitsmedium in den Arbeitsmediumleitungen - gezielt eine oder mehrere der parallel in der Vorrichtung angeordneten Arbeitsmediumleitungen verschlossen werden. Auf diesem Wege wird die Massenstromdichte von Arbeitsmedium in den noch geöffneten Arbeitsmediumleitungen (bei gleichbleibenden Betriebsparametern) erhöht. Statische und dynamische Instabilitäten sowie unzulässige Strömungs- formen, die insbesondere bei geringen Massenstromdichten auftreten, werden auf diese Weise verhindert. Die Vorrichtung kann demzufolge im Gegensatz zum Stand Technik auch bei geringer Last ohne Beeinträchtigung der Funktionsweise betrieben werden.

Die erfindungsgemäße Vorrichtung kann insbesondere als Zwangsdurchlauf-Dampferzeuger ausgebildet sein, durch den das Wärmeträgermedium in im Wesentlichen vertikaler oder horizontaler Richtung geführt wird.

Als Wärmeträgermedium können Thermo-Öle, Salz-Schmelzen oder Gele und als Arbeitsmedium Wasser verwendet werden.

Die Absperrvorrichtungen können zweckmäßiger Weise in den Arbeitsmediumleitungen angeordnet sein, wobei sie in einer, in mehreren oder aber in allen der parallel geschalteten Arbeitsmediumleitungen vorgesehen sein können.

Vorteilhafter Weise sind die Absperrvorrichtungen an der Einlassseite der Arbeitsmediumleitungen vorgesehen. Insbesondere können die Arbeitsmediumleitungen ein- und/oder auslassseitig aus dem Wärmeträgermediumbehälter ragen, wobei dann die Absperrvorrichtungen außerhalb des Wärmeträgermediumbehälters in den Arbeitsmediumleitungen vorgesehen sind. Die Absperrvorrichtungen sind bei dieser Ausführungsform leicht zugänglich und können bei Bedarf auch manuell geöffnet und geschlossen werden.

In vorteilhafter Ausgestaltung der Erfindung ist vorgesehen, dass wenigstens eine Arbeitsmediumleitung einen Zuleitungsabschnitt, in dem die Absperrvorrichtung vorgesehen ist, ein Bündel von parallel geschalteten Zweigleitungen, die von dem Zuleitungsabschnitt abzweigen, und einen Ableitungsabschnitt, der auslassseitig an die Zweigleitungen angeschlossenen ist und diese verbindet, umfasst. Eine hohe Anzahl von mit Arbeitsmedium zu durchströmenden Arbeitsmediumleitungen in dem Wärmeträgermediumbehälter ist vorteilig, da so auch eine hohe Oberfläche für den Wärmetausch zur Verfügung steht. Es ist jedoch nicht unbedingt erforderlich, eine ebenso hohe Anzahl von Absperrvorrichtungen zur Verfügung zu haben, weshalb eine Aufteilung der Arbeitsmediumleitungen in Zweigleitungen, die gemeinsam geöffnet und verschlossen werden, zweckmäßig sein kann.

Eine weitere Ausführungsform der Erfindung zeichnet sich dadurch aus, dass eine Überwachungseinheit vorgesehen ist, welche den Massenstrom des Arbeitsmediums in den Arbeitsmediumleitungen und/oder einer den Arbeitsmediumleitungen einlassseitig vorgeschalteten gemeinsamen Zulaufleitung kontinuierlich überwacht, und eine Steuervorrichtung vorgesehen und mit der Überwachungseinheit und den Absperrvorrichtungen verbunden ist, wobei die Steuervorrichtung die Absperrvorrichtungen in Abhängigkeit von den mit der Überwachungseinheit erfassten Werten des Massenstroms betätigt. Auf diesem Wege wird eine automatisierte Steuerung der Absperrvorrichtungen der erfindungsgemäßen Vorrichtung ermöglicht.

Dabei kann die Steuervorrichtung durch Betätigung einer Absperrvorrichtung wenigstens einer Arbeitsmediumleitung schließen, wenn ein Massenstrom unterhalb eines vorgegebenen Wertes erfasst wird, und wenigstens eine Arbeitsmediumleitung öffnen, wenn eine Massenstrom oberhalb des vorgegebenen Wertes erfasst wird.

In vorteilhafter Ausgestaltung der Erfindung ist vorgesehen, dass den Arbeitsmediumleitungen einlassseitig eine gemeinsame Zulaufleitung zugeschaltet ist. So kann das Arbeitsmedium durch eine einzelne Leitung zugeführt und dann auf die parallel geschalteten Arbeitsmediumleitungen verteilt werden.

In an sich bekannter Weise kann eine Trenneinrichtung zur Trennung von flüssigem und gas- bzw. dampfförmigem Arbeitsmedium vorgesehen sein. Diese kann den Arbeitsmediumleitungen an den üblichen Stellen zugeordnet sein. Zweckmäßiger Weise kann den Arbeitsmediumleitungen auslassseitig eine gemeinsame Ablaufleitung nachgeschaltet und die Trenneinrichtung in der gemeinsamen Ablaufleitung angeordnet sein. Mit der Trenneinrichtung kann flüssiges und gasförmiges Arbeitsmedium aus allen Arbeitsmediumleitungen getrennt werden.

Die Trenneinrichtung kann ein Trenngefäß umfassen, in welchem insbesondere während einer Anlaufphase, in der ein Gemisch aus flüssigem und gas- bzw. dampfförmigem Arbeitsmedium durch die Arbeitsmediumleitungen strömt, die Trennung erfolgt. Das abgetrennte flüssige Arbeitsmedium kann den Arbeitsmediumleitungen einlassseitig wieder zugeführt werden, um den Wärmeträgermediumbehälter erneut zu passieren.

Eine weitere Ausführungsform der Erfindung zeichnet sich dadurch aus, dass sich die Arbeitsmediumleitungen mäanderartig durch den Wärmeträgermediumbehälter erstrecken, wodurch eine hohe Ausdehnung der Arbeitsmediumleitungen in Längsrichtung erzielt wird. Auf diesem Wege steht auch eine hohe Oberfläche der Arbeitsmediumleitungen, welche in direktem Kontakt mit dem Wärmeträgermedium stehen, zur Verfügung und es kann ein effizienter Wärmetausch erfolgen.

Alternativ können die Arbeitsmediumleitungen spiralförmig und ineinander verschränkt ausgebildet sein, wodurch der Rauminhalt des Wärmeträgermediumbehälters, der insbesondere zylinderförmig ausgebildet sein kann, optimal genutzt wird.

Gemäß einer weiteren Ausführungsform der Erfindung sind die Einlässe der Arbeitsmediumleitungen und der Einlass für Wärmeträgermedium an gegenüberliegenden Endbereichen des Wärmeträgermediumbehälters vorgesehen, so dass das Wärmeträgermedium und das Arbeitsmedium im Wesentlichen gegenläufig durch den Wärmeträgermediumbehälter strömen.

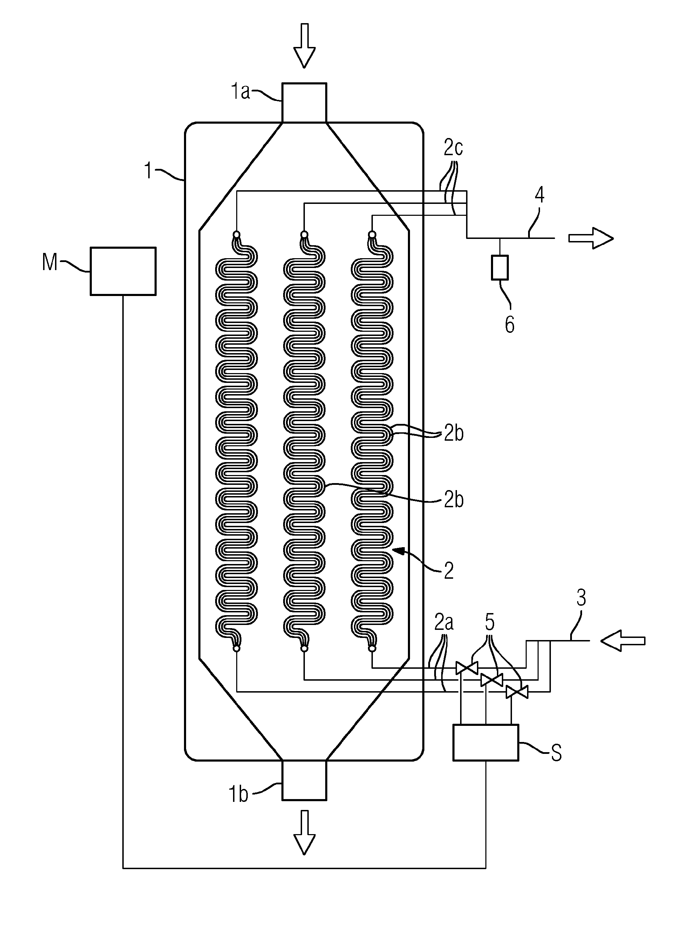

Hinsichtlich weiterer vorteilhafter Ausgestaltungen und Weiterbildungen der Erfindung wird auf die Unteransprüche sowie nachfolgende Beschreibung eines Ausführungsbeispiels unter Bezugnahme auf die beiliegende Zeichnung verwiesen.

In der Zeichnung zeigt die einzige Figur eine erfindungs- gemäße Vorrichtung zur Überführung eines flüssigen Arbeitsmediums in den gasförmigen Zustand in schematischer Darstellung, die in dem dargestellten Ausführungsbeispiel als Dampferzeuger eines in der Zeichnung nicht weiter dargestellten solarthermischen Kraftwerkes ausgebildet ist.

Die Vorrichtung umfasst einen im Wesentlichen zylinderförmig ausgebildeten Wärmeträgermediumbehälter 1, der in seinem oberen Endbereich einen Einlass 1a und in seinem unteren Endbereich einen Auslass 1b für ein Wärmeträgermedium aufweist. Das Wärmeträgermedium ist hier ein Thermo-Öl, welches unter Verwendung von Solarenergie mittels eines dem Wärmeträgermediumbehälter 1 vorgeschalteten Parabolrinnen-Kollektors des solarthermischen Kraftwerkes erwärmt wurde.

Alternativ zu der hier dargestellten Ausführungsform können der Einlass 1a und der Auslass 1b für das Wärmeträgermedium auch beide im unteren Endbereich des Wärmeträgermediumbehälters 1 vorgesehen sein, wobei dann eine Führungsleitung in dem Wärmeträgermediumbehälter 1 vorgesehen ist, durch die das Wärmeträgermedium zum oberen Endbereich des Wärmeträgermediumbehälters geleitet wird.

Durch den Wärmeträgermediumbehälter 1 erstrecken sich insgesamt drei parallel geschaltete Arbeitsmediumleitungen 2, die von Wasser bzw. Wasserdampf als Arbeitsmedium parallel von unten nach oben durchströmt werden. Das Thermo-Öl und das Wasser bzw. der Wasserdampf durchströmen den Wärmeträgermediumbehälter 1 damit im Wesentlichen gegenläufig. Zur Förderung des Thermo-Öls und des Arbeitsmediums sind geeignete Pumpen vorgesehen, die in der Figur nicht dargestellt sind. Den drei Arbeitsmediumleitungen 2 ist eine zentrale Zulaufleitung 3 vor- und eine zentrale Ablaufleitung 4 nachgeschaltet.

Jede der drei Arbeitsmediumleitungen 2 umfasst einen Zuleitungsabschnitt 2a, in dem die Absperrvorrichtung 5 vorgesehen ist, ein Bündel von parallel geschalteten Zweigleitungen 2b, die von dem Zuleitungsabschnitt 2a abzweigen, sowie einen Ableitungsabschnitt 2c, der auslassseitig an die Zweigleitungen 2b angeschlossenen ist und diese verbindet. Die Zweigleitungen 2b werden parallel von Wasser bzw. Wasserdampf durchströmt und sind in dem dargestellten Ausführungsbeispiel mäanderförmig ausgebildet.

In der zentralen Ablaufleitung 4 ist eine Trenneinrichtung 6 zur Trennung von Wasser und Wasserdampf angeordnet. Der Ablaufleitung 4 nachgeschaltet ist eine nicht eingezeichnete Turbine des solarthermischen Kraftwerkes.

Die Vorrichtung umfasst ferner eine Überwachungseinheit M, welche den Massenstrom des Arbeitsmediums in der den Arbeitsmediumleitungen 2 einlassseitig vorgeschalteten zentralen Zulaufleitung 3 kontinuierlich überwacht. Darüber hinaus ist eine Steuervorrichtung S vorgesehen, die mit der Überwachungseinheit M und den Absperrvorrichtungen 5 verbunden ist. Die Steuervorrichtung S betätigt die Absperrvorrichtungen 5 in Abhängigkeit von den mit der Überwachungseinheit M erfassten Werten des Massenstroms. Konkret schließt die Steuervorrichtung S durch Betätigung einer Absperrvorrichtung 5 wenigstens eine Arbeitsmediumleitung 2, wenn ein Massenstrom unterhalb eines vorgegebenen Wertes erfasst wird, und öffnet wenigstens eine Arbeitsmediumleitung 2, wenn ein Massenstrom oberhalb des vorgegebenen Wertes erfasst wird.

Im Betrieb wird unter Verwendung von Solarenergie erwärmtes Thermo-Öl durch den Wärmeträgermediumbehälter 1 geleitet. Gleichzeitig wird über die zentrale Zulaufleitung 3 den drei parallel geschalteten Arbeitsmediumleitungen 2 Wasser zugeführt und durchströmt diese. Dabei wird Wärme von dem Thermo-Öl, welches die Arbeitsmediumleitungen 2 in dem Wärmeträgermediumbehälter 1 umströmt, auf das durch die Arbeitsmediumleitungen 2 fließende Wasser übertragen, so dass dieses verdampft. Der erzeugte Wasserdampf wird über die Ableitungsabschnitte 2c in die zentrale Ablaufleitung 4 geführt. In der in der Ablaufleitung 4 vorgesehenen Trenneinrichtung 6 wird Wasserdampf von gegebenenfalls noch nicht verdampftem Wasser getrennt, und das abgetrennte Wasser wird über eine nicht eingezeichnete Bypassleitung in die zentrale Zulaufleitung 3 zurückgeführt.

Der Wasserdampf wird über die zentrale Ablaufleitung 4 der Turbine zugeführt und treibt diese zur Stromerzeugung an.

Während des Betriebes wird der Massenstrom des Wassers in der zentralen Zulaufleitung 3 mittels der Überwachungseinheit M kontinuierlich überwacht. Wird ein Massenstrom unterhalb eines vorgegebenen Wertes erfasst, schließt die Steuervorrichtung S durch Betätigung einer der Absperrvorrichtungen 5 eine Arbeitsmediumleitung 2. Auf diesem Wege wird die Massenstromdichte in den noch geöffneten Arbeitsmediumleitungen 2 (bei gleichbleibenden Betriebsparametern) erhöht. So werden statische und dynamische Instabilitäten sowie unzulässige Strömungsformen, die bei niedrigen Massenstromdichten auftreten, verhindert.

Wird von der Überwachungseinheit M festgestellt, dass der Massenstrom oberhalb eines vorgegebenen Wertes liegt, d.h. wieder ausreichend hoch ist, öffnet die Steuervorrichtung S die Arbeitsmediumleitung 2 durch Betätigung der Absperrvorrichtung 5 wieder. Je nach erfasstem Wert des Massenstroms können auch mehrere Arbeitsmediumleitungen 2 geöffnet bzw. verschlossen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung zur Überführung eines flüssigen Arbeitsmediums in den gas- bzw. dampfförmigen Zustand,
insbesondere zur Erzeugung von Wasserdampf,
mit wenigstens einem Wärmeträgermediumbehälter (1), der von einem Wärmeträgermedium, insbesondere einem Thermo-Öl, einer Salz-Schmelze oder einem Gel durchströmt wird, und mit mehreren parallel geschalteten Arbeitsmediumleitungen (2), die sich durch den Wärmeträgermediumbehälter (1) erstrecken und von einem Arbeitsmedium parallel durchströmt werden, so dass Wärme von dem Wärmeträgermedium auf das Arbeitsmedium übertragen wird und das Arbeitsmedium in den gasförmigen Zustand übergeht,
**dadurch gekennzeichnet, dass**
wenigstens einer der parallel geschalteten Arbeitsmediumleitungen (2) eine Absperrvorrichtung (5) zugeordnet ist, um die Arbeitsmediumleitung (2) zu öffnen und zu verschließen.

2. Vorrichtung nach Anspruch 1,
**dadurch gekennzeichnet, dass**
in mehreren Arbeitsmediumleitungen (2) jeweils eine Absperrvorrichtung (5) vorgesehen ist.

3. Vorrichtung nach Anspruch 1 oder 2,
**dadurch gekennzeichnet, dass**
in allen Arbeitsmediumleitungen (2) eine Absperrvorrichtung (5) vorgesehen ist.

4. Vorrichtung nach einem der vorhergehenden Ansprüche,
**dadurch gekennzeichnet, dass**
die Absperrvorrichtungen (5) an der Einlassseite der Arbeitsmediumleitungen (2) vorgesehen sind.

5. Vorrichtung nach Anspruch 4,
**dadurch gekennzeichnet, dass**
die Arbeitsmediumleitungen (2) ein- und/oder auslassseitig aus dem Wärmeträgermediumbehälter (1) ragen und die Absperrvorrichtungen (5) außerhalb des Wärmeträgermediumbehälters (1) in den Arbeitsmediumleitungen (2) vorgesehen sind.

6. Vorrichtung nach einem der vorhergehenden Ansprüche,
**dadurch gekennzeichnet, dass**
wenigstens eine Arbeitsmediumleitung (2) einen Zuleitungsabschnitt (2a), in dem die Absperrvorrichtung (5) vorgesehen ist, ein Bündel von parallel geschalteten Zweigleitungen (2b), die von dem Zuleitungsabschnitt (2a) abzweigen, und einen Ableitungsabschnitt (2c), der auslassseitig an die Zweigleitungen (2b) angeschlossenen ist und diese verbindet, umfasst.

7. Vorrichtung nach einem der vorhergehenden Ansprüche,
**dadurch gekennzeichnet, dass**
eine Überwachungseinheit (M) vorgesehen ist, welche den Massenstrom des Arbeitsmediums in den Arbeitsmediumleitungen (2) und/oder einer den Arbeitsmediumleitungen (2) einlassseitig vorgeschalteten gemeinsamen Zulaufleitung (3) kontinuierlich überwacht, und eine Steuervorrichtung (S) vorgesehen und mit der Überwachungseinheit (M) und den Absperrvorrichtungen (5) verbunden ist,
wobei die Steuervorrichtung (S) die Absperrvorrichtungen (5) in Abhängigkeit von den mit der Überwachungseinheit (M) erfassten Werten des Massenstroms betätigt.

8. Vorrichtung nach Anspruch 7,
**dadurch gekennzeichnet, dass**
die Steuervorrichtung (S) durch Betätigung einer Absperrvorrichtung (5) wenigstens eine Arbeitsmediumleitung (2) schließt, wenn ein Massenstrom unterhalb eines vorgegebenen Wertes erfasst wird, und wenigstens eine Arbeitsmediumleitung (2) öffnet, wenn ein Massenstrom oberhalb des vorgegebenen Wertes erfasst wird.

9. Vorrichtung nach einem der vorhergehenden Ansprüche,
**dadurch gekennzeichnet, dass**
wenigstens eine Trenneinrichtung (6) zur Trennung von flüssigem und gas- bzw. dampfförmigem Arbeitsmedium vorgesehen ist.

10. Kraftwerk mit
- einem Wärmeträgermedium-Kreislauf für ein Wärmeträgermedium, welches insbesondere unter Verwendung von Sonnenstrahlung erwärmt wird,
- einem Arbeitsmedium-Kreislauf,
- einem Dampferzeuger, der Teil des Wärmeträgermedium-Kreislaufs und des Arbeitsmedium-Kreislaufs ist und in dem Wärme von dem Wärmeträgermedium auf das Arbeitsmedium übertragen wird, so dass dieses in den gasförmigen Zustand übergeht und expandiert, und
- einer dem Dampferzeuger in dem Arbeitsmedium-Kreislauf nachgeschalteten Turbine, die von expandierendem Arbeitsmedium angetrieben wird,
**dadurch gekennzeichnet, dass**
der Dampferzeuger in Form einer Vorrichtung nach einem der vorhergehenden Ansprüche ausgebildet ist.
